(19) Europäisches Patentamt
European Patent Office
Office européen des brevets

(11) Veröffentlichungsnummer: **0 155 051**
**B1**

(12) # EUROPÄISCHE PATENTSCHRIFT

(45) Veröffentlichungstag der Patentschrift: **07.11.90**

(51) Int. Cl.[5]: **C 03 C 25/02,** C 09 D 183/07

(21) Anmeldenummer: **85200308.6**

(22) Anmeldetag: **04.03.85**

(54) **Optische Glasfaser mit einer Kunststoffbedeckung und Verfahren zur Herstellung derselben.**

(30) Priorität: **07.03.84 NL 8400727**

(43) Veröffentlichungstag der Anmeldung:
**18.09.85 Patentblatt 85/38**

(45) Bekanntmachung des Hinweises auf die Patenterteilung:
**07.11.90 Patentblatt 90/45**

(84) Benannte Vertragsstaaten:
**DE FR GB IT NL SE**

(56) Entgegenhaltungen:
**EP-A- 97 333**
**FR-A-2 359 798**
**US-A-4 270 840**

**CHEMICAL ABSTRACTS, Band 98, 30. Mai 1983, Seite 298, Nr. 184405p, Columbus, Ohio, US; & JP - A - 57 183 337 (NIPPON TELEGRAPH AND TELEPHONE PUBLIC CORP.) 11.11.1982**

(73) Patentinhaber: **N.V. Philips' Gloeilampenfabrieken**
**Groenewoudseweg 1**
**NL-5621 BA Eindhoven (NL)**

(72) Erfinder: **Broer, Dirk Jan**
**p/A INT. OCTROOIBUREAU B.V. Prof. Holstlaan 6**
**NL-5656 AA Eindhoven (NL)**
Erfinder: **Mol, Grietje Neeltje**
**p/A INT. OCTROOIBUREAU B.V. Prof. Holstlaan 6**
**NL-5656 AA Eindhoven (NL)**

(74) Vertreter: **Pennings, Johannes et al**
**Internationaal Octrooibureau B.V. Prof. Holstlaan 6**
**NL-5656 AA Eindhoven (NL)**

**EP 0 155 051 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

(56) Entgegenhaltungen:
CHEMICAL ABSTRACTS, Band 92, 28. Januar 1980, Seite 48, Nr. 23481w, Columbus, Ohio, US; & JP - A - 79 99 168 (SHIN-ETSU CHEMICAL INDUSTRY CO., LTD.) 04.08.1979

Kirk-Othmer "Encyclopedia of Chemical Technology", 3. Auflage, Band 19, 1982, Seiten 616, 617

Farbe und Lack, Band 88, Seiten 632-635 (1982)

**Beschreibung**

Die Erfindung bezieht sich auf eine optische Glasfaser mit einer Kunststoffbedeckung, umfassend eine Glasfaser und eine Umhüllungsschicht aus einem Kunstgummi mit einer Brechzahl, die höher als die der äusseren Schicht der Glasfaser ist, wobei das Kunstgummi aus einer härtbaren Kunststoffzusammensetzung gebildet ist, die ein Kopolymer enthält, das als monomere Einheiten Dimethylsiloxan und mindestens ein Siloxan aus der Gruppe, die durch Methyl-Phenylsiloxan und Diphenylsiloxan gebildet ist, aufweist.

Die Erfindung bezieht sich ebenfalls auf ein Verfahren zur Herstellung einer optischen Glasfaser mit einer Kunststoffbedeckung, wobei eine Glasfaser unmittelbar nach der Bildung mit einer Schicht einer härtbaren Kunststoffzusammensetzung umgeben wird, die ein Kopolymer enthält, das als monomere Einheiten Dimethylsiloxan und mindestens ein Siloxan aus der Gruppe, die durch Methyl-Phenylsiloxan und Diphenylsiloxan gebildet wird, umfasst wonach die härtbare Kunststoffzusammensetzung zum Aushärten gebracht wird.

Eine derartige optische Glasfaser und ein Verfahren zur Herstellung derselben sind aus der US-Patentschrift 4270840 bekannt. Dabei wird eine Glasfaser unmittelbar nach der Bildung mit einer Bedeckung versehen, um zu vermeiden, dass die Faser durch Beschädigung der Oberfläche oder durch Verwitterung ihre ursprüngliche grosse Festigkeit verliert. Dazu wird eine erste weiche Schicht um die Faser angebracht. Diese erste Schicht mit gummiartigen Eigenschaften sorgt ausserdem dafür, dass geringfügige axiale Biegungen der Faser vermieden werden, wodurch die Glasfaser nur geringe optische Verluste aufweist. Die Schicht wird aus einer härtbaren Kunststoffzusammensetzung gebildet, die durch Erhöhung der Temperatur zum Aushärten gebracht wird, wobei unter dem Einfluss einer Platinverbindung als Katalysator eine Reaktion zwischen Vinylgruppen in der Kunststoffzusammensetzung auftritt. Auch ist es möglich, eine Kunststoffzusammensetzung zu verwenden, die unter dem Einfluss von Licht in Anwesenheit einer Benzoinverbindung als Initiator ausgehärtet wird. Die ausgehärtete Schicht hat eine Brechzahl zwischen 1,40 und 1,52 und ein Elastizitätsmodul, das kleiner als 2 MPa ist. Die Bedeckungsgeschwindigkeit der Glasfaser beträgt 0,5 bis 2 m/s.

Danach wird eine zweite Schicht angebracht, die dieselbe Zusammensetzung haben kann wie die erste Schicht, aber ein höheres Elastizitätsmodul und eine kleinere Brechzahl aufweisen darf. Ausserdem kann eine Mantel aus einem thermoplastischen Kunststoff um die Faser angebracht werden, beispielsweise durch Extrusion.

Eine optische Glasfaser, wie sie obenstehend beschrieben ist, kann zur übertragung von Lichtsignalen über grosse Abstände, beispielsweise in der Fernmeldetechnik, verwendet werden.

Die Erfindung hat die Aufgabe, eine optische Glasfaser mit einer Kunststoffbedeckung und ein Verfahren zur Herstellung derselben zu schaffen, wobei eine härtbare Kunststoffzusammensetzung mit einer Aushärtezeit, die kürzer als 0,5 Sekunde ist, verwendet wird. Dadurch wird eine Bedeckungsgeschwindigkeit der Glasfaser möglich, die grösser ist als 5 m/s, ohne dass die erforderliche Vorrichtung unwirtschaftlich grosse Abmessungen aufweist.

Die Erfindung hat weiterhin die Aufgabe, eine derartige optische Glasfaser zu schaffen, wobei die ausgehärtete Kunststoffzusammensetzung ein Elastizitätsmodul aufweist, das zwischen 0,1 und 10 MPa liegt, und wobei die ausgehärtete Kunststoffzusammensetzung bei Temperaturen bis 250° nicht fliesst. Dabei ist es erwünscht, dass die ausgehärtete Kunststoffzusammensetzung diese guten Eigenschaften aufweist, ohne dass feste Füllmittel verwendet werden, weil diese die Faser beschädigen können, wodurch die Festigkeit der Faser beeinträchtigt werden würde.

Die Erfindung hat auch die Aufgabe, eine optische Glasfaser mit einer Kunststoffzusammensetzung und ein Verfahren zur Herstellung derselben zu schaffen, wobei die härtbare Kunststoffzusammensetzung in einer homogenen Schicht ohne Tropfenbildung auf einer sich schnell bewegenden Faser angebracht werden kann, auch wenn die Faser eine hohe Temperatur hat.

Die Erfindung bezweckt weiterhin, eine derartige optische Glasfaser zu schaffen, bei der die Kunststoffbedeckung am Ende der Glasfaser auf einfache Weise durch Abstreifen völlig entfernt werden kann, um Verbindungen zu ermöglichen. Das Abstreifen kann mechanisch sowie durch Verwendung eines Lösungsmittels erfolgen.

In dem Fall, dass die härtbare Kunststoffzusammensetzung auf einer Faser aus Quarzglas verwendet wird, wobei mit UV-Licht ausgehärtet wird, ist es erwünscht, dass die härtbare Kunststoffzusammensetzung das UV-Licht in ausreichendem Masse absorbiert, um eine Beschädigung des Quarzglases zu vermeiden.

Diese Aufgaben werden nach der Erfindung durch eine optische glasfaser mit einer Kunststoffbedeckung und durch ein Verfahren zur Herstellung derselben gelöst, wobei eine härtbare Kunststoffzusammensetzung verwendet wird, die ein Kopolymer umfasst, das eine Verbindung mit der folgenden Formel ist:

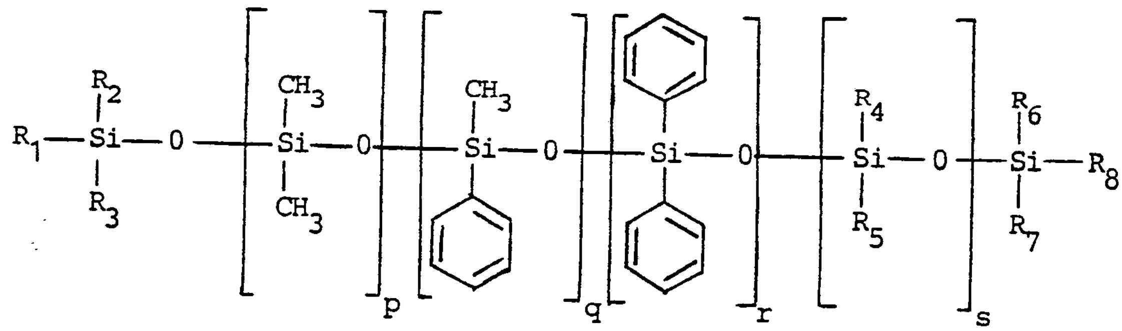

worin $R_1$ und $R_8$ organische Gruppen sind, die aus der Gruppe gewählt sind, die durch Alkylgruppen, Arylgruppen und akrylatesterhaltige Alkylgruppen gebildet ist, worin $R_2$, $R_3$, $R_4$, $R_6$ und $R_7$ organische Gruppen sind, die aus der Gruppe gewählt sind, die durch Alkylgruppen und Arylgruppen gebildet ist, und worin $R_5$ eine akrylatesterhaltige organische Gruppe ist, wobei das mittlere Molekulargewicht der Polymermoleküle zwischen 1000 und 1000000 liegt, wobei die mittleren Fraktionen der monomeren Einheiten je Polymermolekül innerhalb der folgenden Grenzen liegen:

$0{,}005 \leq p \leq 0{,}995$
$0 \leq q \leq 0{,}995$
$0 \leq r \leq 0{,}49$
$0{,}02 \leq s \leq 0{,}1,$

wobei $0{,}25 \leq (q+2r) \leq 0{,}6$ ist und wobei die monomeren Einheiten blockweise, alternierend oder beliebig in dem Molekül verteilt sein können und wobei das Kopolymer mindestens zwei Akrylatestergruppen je Molekül enthält.

Eine akrylatesterhaltige Alkylgruppe ist eine Gruppe mit der folgenden Formel:

$$-R_9-O-\underset{\underset{O}{\|}}{C}-CH=CH_2$$

worin $R_9$ ein zweiwertiger Alkylrest ist, beispielsweise $-(CH_2)_n-$, worin $n \geq 1$ ist.

Bei einer blockweisen Verteilung monomerer Einheiten in einem Kopolymermolekül befinden sich die identischen monomeren Einheiten in einer oder mehreren Gruppen, die mit einer oder mehreren Gruppen verbunden sind, die aus anderen monomeren Einheiten aufgebaut sind. Bei einer alternierenden Verteilung monomerer Einheiten in einem Kopolymermolekül gibt es im wesentlichen einen regelmässigen Aufbau, wobei nur ein Typ monomerer Einheit in der Polymerkette durch jeweils einen anderen Typ monomerer Einheit abgewechselt wird. Bei einer beliebigen Verteilung monomerer Einheiten in einem Kopolymermolekül sind die jeweiligen Typen monomerer Einheiten beliebig in der Polymerkette in Gruppen abwechselnder Länge und Zusammensetzung verteilt.

Aus der japanischen Patentanmeldung JP—A—5499168, siehe auch Chem. Abstr. *92*, Nr. 23481 w (1980), sind Laminate bekannt welche mit Glasfasern verstärkt werden, wobei Akrylatgruppen enthaltenden Silikonpolymere verwendet werden. Die Silikonpolymere enthalten keine Phenylgruppen.

Aus der Kirk-Othmer "Encyclopedia of Chemical Technology", 3 Auflage, Band 19, Seiten 616 bis 617 (1982) ist die Verwendung von Akrylatgruppen in strahlungshärtende Kunststoffzusammensetzung und von Phenone als lichtempfindlichen Initiatoren an sich bekannt.

In einer geeigneten härtbaren Kunststoffzusammensetzung nach der Erfindung ist $R_5$ eine akrylatesterhaltige Alkylgruppe.

Die Aushärtegeschwindigkeit ist gross, wenn ein nicht zu geringer Wert von s gewählt wird. Die reaktiven Gruppen $R_5$ in der Mitte der Polymerkette haben zwar eine kleinere Beweglichkeit und dadurch eine geringere Reaktionsgeschwindigkeit als die endständigen Gruppen $R_1$ und $R_8$, aber bei einer ausreichend grossen Anzahl gibt es dennoch eine spürbare Verringerung der Aushärtezeit. Eine Aushärtezeit, die kürzer als 0,5 Sekunde ist, wird in einer härtbaren Kunststoffzusammensetzung nach der Erfindung erreicht, wobei s grösser als 0,02 ist.

Eine grosse Aushärtegeschwindigkeit kann erreicht werden, wenn mehr als zwei reaktive Endgruppen in dem Molekül vorhanden sind, weil das Polymermolekül verzweigt ist. Dies kann nach der Erfindung erfüllt werden, wenn $R_5$ eine akrylatesterhaltige Polysiloxankette von demselben typ und mit derselben mittleren Zusammensetzung wie die Hauptkette des Polymermoleküls ist.

Um eine optische Glasfaser nach der Erfindung zu erhalten, wobei die ausgehärtete Kunststoffzusammensetzung eine Glasübergangstemperatur aufweist, die niedriger als −50°C ist, und eine Brechzahl aufweist, die grösser als 1,46 ist, ist es zweckmässig, dass (q+2r) zwischen den Grenzen 0,25 und 0,6 liegt.

Mit einer Brechzahl, die grösser als 1,46 ist, wird erreicht, dass bei Verwendung von Quarzglasfasern eine Lichtleitung nur durch den Kern der Glasfaser auftritt.

Um die überwachung bei der Herstellung einer derartigen optischen Glasfaser zu vereinfachen, ist die Brechzahl vorzugsweise grösser als 1,48. Dies kann erreicht werden, zusammen mit einem ausreichenden UV-Absorptionsvermögen, um Quarzglasfasern zu schützen, wenn (q+2r) zwischen den Grenzen 0,4 und 0,6 liegt.

Die härtbare Kunststoffzusammensetzung kann durch Bestrahlung mit UV-Licht oder durch Bestrahlung mit Elektronen ausgehärtet werden. Wenn durch Bestrahlung mit UV-Licht ausgehärtet wird, muss der Kunststoffzusammensetzung ein lichtempfindlicher Initiator zugefügt werden.

In einer optischen Glasfaser nach der Erfindung mit einer unter Anwendung von UV-Licht ausgehärteten Kunststoffzusammensetzung ist es zweckmässig, dass die härtbare Kunststoffzusammensetzung 1 bis 5 Gewichts% eines lichtempfindlichen Initiators enthält.

In einer besonderen Ausführungsform ist der lichtempfindliche Initiator aus der Gruppe gewählt, die durch 2,2-Dimethoxy-2-Phenyl-Acetophenon, 2,2-Diäthoxy-Acetophenon und 2,2-Dimethyl-2-Hydroxy-Acetophenon gebildet wird.

Eine optische Glasfaser nach der Erfindung mit einer besonders schnell härtbaren Kunststoffzusammensetzung wird erhalten, wenn die härtbare Kunststoffzusammensetzung 0 bis 20 Gewichts% einer oder mehrerer monomerer Akrylatverbindungen enthält.

In einer besonderen Ausführungsform sind die monomeren Akrylatverbindungen aus der Gruppe gewählt, die durch Hexandioldiakrylat, 2-Äthoxy-Äthylakrylat, 2'-Äthoxy-2-Äthoxy-Äthylakrylat und Trimethylolpropantriakrylat gebildet wird.

In einer geeigneten Ausführungsform eines Verfahrens nach der Erfindung wird die härtbare Kunststoffzusammensetzung durch Bestrahlung mit Elektronen zum Aushärten gebracht.

Eine andere geeignete Ausführungsform eines Verfahrens nach der Erfindung ist dadurch gekennzeichnet, dass die härtbare Kunststoffzusammensetzung einen lichtempfindlichen Initiator enthält und durch Bestrahlung mit UV-Licht zum Aushärten gebracht wird.

Ausführungsbeispiele der Erfindung werden im folgenden näher beschrieben anhand einer Zeichnung.

Es zeigen:

Fig. 1 einen Schnitt durch eine mögliche Ausführungsform einer Glasfaser mit einer erfindungsgemässen Kunststoffbedeckung,
Fig. 2a 2,2-Dimethoxy-2-Phenyl-Acetophenon,
Fig. 2b 2,2-Diäthoxy-Acetophenon,
Fig. 2c 2,2-Dimethyl-2-Hydroxy-Acetophenon,
Fig. 3a Hexandioldiakrylat,
Fig. 3b 2-Äthoxy-Äthylakrylat,
Fig. 3c 2'-Äthoxy-2-Äthoxy-Äthylakrylat und
Fig. 3d Trimethylolpropantriakrylat.

Ausführungsbeispiele des erfindungsgemässen Verfahrens:

Eine Glasfaser wird auf bekannte Weise durch Ziehen aus einer Vorform gebildet. Fig. 1 zeigt einen Schnitt durch eine Glasfaser mit einem Kernglas 1 und einem Mantelglas 2 mit unterschiedlichen Brechzahlen. Das erfindungsgemässe Verfahren kann auch bei Glasfasern angewandt werden, die mit dem Doppeltiegelverfahren gebildet sind, und statt eines gestuften Brechzahlverlaufes kann auch eine allmählich verlaufende Brechzahl vorliegen. Die in Fig. 1 dargestellte Glasfaser hat einen kreisförmigen Querschnitt, aber der Querschnitt kann auch eine beliebige andere Form haben, beispielsweise elliptisch oder quadratisch.

Unmittelbar nach dem Bilden wird auf der Glasfaser eine Schicht aus einer härtbaren Kunststoffzusammensetzung angebracht, die ein Kopolymer und 4 Gewichts% eines lichtempfindlichen Initiators enthält. Eine geeignete Schichtdicke auf einer Glasfaser mit einem Durchmesser von 125 µm ist beispielsweise 30 µm. Das Kopolymer ist eine Verbindung wie obenstehend beschrieben, wobei der nach der Zahl berechnete Mittelwert des Molekulargewichts $M_n = 30000$ ist und $p = 0,52$, $q = 0,42$, $s = 0,06$ und wobei $R_5$ eine akrylatesterhaltige Akrylgruppe ist. Als lichtempfindlicher Initiator wird 2,2-Dimethoxy-2-Phenyl-Acetophenon (Fig. 2a) verwendet. Die härtbare Kunststoffzusammensetzung hat ene Brechzahl $n_D = 1,4887$. Die Viskosität bei 25°C beträgt 1030 mPa.s, bei 45°C beträgt sie 460 mPa.s.

Die härtbare Kunststoffzusammensetzung wird unter Bildung einer Schicht aus einem Kunstgummi 3 ausgehärtet. Zum Aushärten ist beispielsweise ein Quecksilberhochdruckentladungslampe geeignet, die Licht mit Wellenlängen zwischen 200 und 400 nm und mit einer Intensität, gemessen auf der Kunststoffzusammensetzung, von 0,6 W/cm$^2$ erzeugt. Die Aushärtezeit beträgt 0,12 Sekunde. Die härtbare Kunststoffzusammensetzung kann auch durch Bestrahlung mit Elektronen mit einer Energie von 100 bis 500 keV ausgehärtet werden. Dazu ist beispielsweise eine "Electrocurtain"-Anlage geeignet (ein Erzeugnis von Energy Sciences Inc., Woburn, Massachusetts).

Die ausgehärtete Kunststoffzusammensetzung 3 hat eine Brechzahl $n_D = 1,4890$, eine Glasübergangstemperatur $T_g = -68$°C und ein Elastizitätsmodul von 0,8 MPa.

Die Glasfaser kann zum weiteren Schutz mit einer zweiten Kunststoffschicht, vorzugsweise mit einem höheren Elastizitätsmodul, umgeben werden. Dazu ist beispielsweise eine Schicht mit einer Dicke von 30 µm aus einem UV-härtenden Akrylatharz mit einem Elastizitätsmodul von 100 MPa geeignet.

Ausserdem kann die Glasfaser mit einem Mantel aus einem thermoplastischen Kunststoff, beispielsweise Nylon mit einer Dicke von 323 µm umgeben werden. Auch kann durch Extrusion ein Kunststoffrohr um die Faser angebracht werden, worin die Faser lose angeordnet ist.

Ausführungsbeispiel von erfindungsgemässen optischen Glasfasern

Glasfasern werden mit einer Kunststoffbedeckung versehen und zwar auf eine Art und Wiese, die dem obenstehend beschriebenen Verfahren entspricht, mit härtbaren Kunststoffzusammensetzung entsprechend der Tafel 1. Die Tafel 1 erwähnt einige Eigenschaften von härtbaren Kunststoffzusammensetzung bei einigen unterschiedlichen Verhältnissen der monomeren Einheiten in dem Kopolymer. $T_g$ ist die Glasübergangstemperatur des Materials nach dem Aushärten, d.h. die Temperatur oberhalb der das Material gummiartige Eigenschaften aufweist. $n_D$ ist die Brechzahl des Materials bei 25°C vor dem Aushärten.

<u>Tafel 1</u>

| p | q | s | $T_g$ (°C) | $n_D^{25}$ |
|---|---|---|---|---|
| 0,60 | 0,40 | 0 | -80 | 1,481 |
| 0,39 | 0,61 | 0 | -55 | 1,506 |
| 0,41 | 0,58 | 0,01 | -59 | 1,503 |
| 0,49 | 0,49 | 0,02 | -60 | 1,500 |
| 0,69 | 0,25 | 0,06 | -94 | 1,461 |
| 0,56 | 0,38 | 0,06 | -77 | 1,478 |

Aus der Tafel 1 geht hervor, dass die Glasübergangstemperatur bei einem zunehmenden Gehalt an Dimethylsiloxan abnimmt. Dagegen nimmt die Brechzahl bei zunehmenden Gehalten an Methyl-Phenylsiloxan oder Diphenylsiloxan zu.

Die Geschwindigkeit des Aushärtens wird vergrössert wenn eine Menge einer mitreagierenden monomeren Akrylatverbindung zu der härtbaren Kunststoffzusammensetzung hinzugefügt wird. Die Wirkung der Hinzufügung von Hexandioldiakrylat (HDDA, Fig. 3a), 2′-Äthoxy-2-Äthoxy-Äthylakrylat (EEEA, Fig. 3c) oder Trimethylolpropantriakrylat (TMPTA, Fig. 3d) geht aus der Tafel 2 hervor, in der auch einige Eigenschaften der erhaltenen ausgehärteten Materialien erwähnt sind. Das verwendete Kopolymer hat einen nach der Zahl berechneten Mittelwert des Molekulargewichts $M_n = 14000$, $p = q = 0,49$ und $s = 0,02$. Die Aushärtezeit ist die Zeit, die notwendig ist, um eine klebfreie Oberfläche beim Aushärten mit UV-Licht mit einer Lampe, wie diese obenstehend beschrieben wurde, zu erhalten.

<u>Tafel 2</u>

| HDDA (Gew.%) | EEEA (Gew.%) | TMPTA (Gew.%) | Aushärtezeit (s) | $T_g$ (°C) | $N_D^{25}$ |
|---|---|---|---|---|---|
| 0 | 0 | 0 | 4,8 | -60 | 1,503 |
| 10 | 0 | 0 | 0,12 | -57 | 1,504 |
| 20 | 0 | 0 | 0,06 | -57 | 1,505 |
| 0 | 10 | 0 | 2,4 | -60 | 1,500 |
| 0 | 20 | 0 | 2,3 | -60 | 1,496 |
| 0 | 0 | 20 | 0,05 | -57 | 1,507 |

Die Zunahme der Reaktionsgeschwindigkeit ist überraschend gross, namentlich wenn Hexandioldiakrylat oder Trimethylolpropantriakrylat hinzugefügt ist. Bei einer Hinzufügung von 0 bis 20 Gew.% eines monomeren Akrylats nimmt die Glasübergangstemperatur nur wenig zu, so dass die gummiartigen Eigenschaften des ausgehärteten Erzeugnisses nicht beeinträchtigt werden. Der geringe Einfluss auf die Brechzahl kann dazu benutzt werden, die Brechzahl innerhalb enger Grenzen auf einen gewünschten Wert zu bringen.

Der härtbaren Kunststoffzusammensetzung können weiterhin noch Fliessverbesserer hinzugefügt

werden, beispielsweise Hexamethyldisiloxan, Akryloxypropylpentamethyldisiloxan und Diakryloxypropyltetramethyldisiloxan.

Bei einer erfindungsgemässen Glasfaser tritt keine Kristallisierung in dem Kunstgummi über der Glasübergangstemperatur desselben auf, auch nicht bei niedrigen Temperaturen in der Nähe der Glasübergangstemperatur, so dass das Elastizitätsmodul auch dort einen niedrigen Wert hat.

**Patentansprüche:**

1. Optische Glasfaser mit einer Kunststoffbedeckung, umfassend eine Glasfaser und eine Umhüllungsschicht aus einem Kunstgummi mit einer Brechzahl, die höher als die der äusseren Schicht der Glasfaser ist, wobei das Kunstgummi aus einer härtbaren Kunststoffzusammensetzung gebildet ist, die eine Kopolymer enthält, das als monomere Einheiten Dimethylsiloxan und mindestens ein Siloxan aus der Gruppe, die durch Methyl-Phenylsiloxan und Diphenylsiloxan gebildet ist, aufweist, dadurch gekennzeichnet, dass das Kopolymer eine Verbindung mit der folgenden Formel ist:

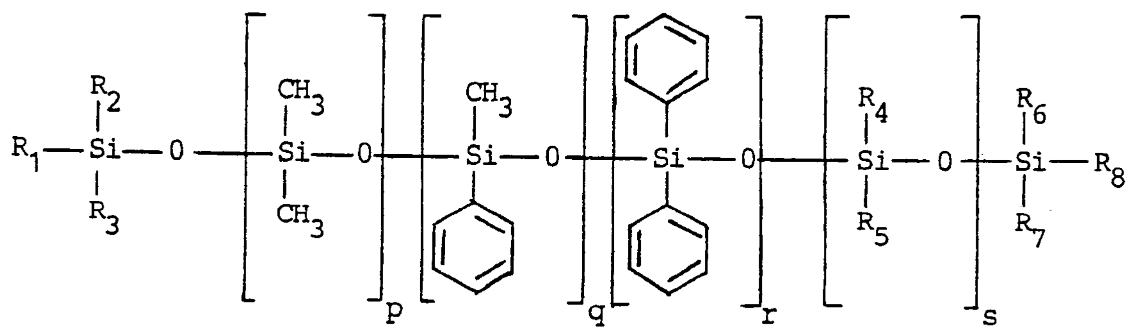

worin $R_1$ und $R_8$ organische Gruppen sind, die aus der Gruppe gewählt sind, die durch Alkylgruppen, Arylgruppen und akrylatesterhaltige Alkylgruppen gebildet ist, worin $R_2$, $R_3$, $R_4$, $R_6$ und $R_7$ organische Gruppen sind, die aus der Gruppe gewählt sind, die durch Alkylgruppen und Arylgruppen gebildet ist, und worin $R_5$ eine akrylatesterhaltige organische Gruppe ist, wobei das mittlere Molekulargewicht der Polymermoleküle zwischen 1000 und 1000000 liegt, wobei die mittleren Fraktionen der monomeren Einheiten je Polymermolekül innerhalb der folgenden Grenzen liegen:

$0{,}005 \leq p \leq 0{,}995$
$0 \leq q \leq 0{,}995$
$0 \leq r \leq 0{,}49$
$0{,}02 \leq s \leq 0{,}1,$

wobei $0{,}25 \leq (q+2r) \leq 0{,}6$ ist und wobei die monomeren Einheiten blockweise, alternierend oder beliebig in dem Molekül verteilt sein können und wobei das Kopolymer mindestens zwei Akrylatestergruppen je Molekül enthält.

2. Optische Glasfaser nach Anspruch 1, dadurch gekennzeichnet, dass $R_5$ eine akrylatesterhaltige Alkylgruppe ist.

3. Optische Glasfaser nach Anspruch 1, dadurch gekennzeichnet, dass $R_5$ eine akrylatesterhaltige Polysiloxankette von demselben Typ und mit derselben mittleren Zusammensetzung wie die Hauptkette des Polymermoleküls ist.

4. Optische Glasfaser nach Anspruch 1, dadurch gekennzeichnet, dass (q+2r) zwischen den Grenzen 0.4 und 0.6 liegt.

5. Optische Glasfaser nach einem der Ansprüche 1 bis 4, dadurch gekennzeichnet, dass die härtbare Kunststoffzusammensetzung 0 bis 20 Gewichts% einer oder mehrerer monomerer Akrylatverbindungen enthält.

6. Optische Glasfaser nach Anspruch 5, dadurch gekennzeichnet, dass die monomeren Akrylatverbindungen aus der Gruppe gewählt sind, die durch Hexandioldiakrylat, 2-Äthoxy-Äthylakrylat, 2'-Äthoxy-2-Äthoxy-Äthylakrylat und Trimethylolpropantriakrylat gebildet wird.

7. Verfahren zur Herstellung einer optischen Glasfaser mit einer Kunststoffzusammensetzung, wobei eine Glasfaser unittelbar nach er Bildung mit einer Schicht einer härtbaren Kunststoffzusammensetzung umgeben wird, die ein Kopolymer enthält, das als monomere Einheiten Dimethylsiloxan und mindestens ein Siloxan aus der Gruppe, die durch Methyl-Phenylsiloxan und Diphenylsiloxan gebildet wird, umfasst, wonach die härtbare Kunststoffzusammensetzung zum Aushärten gebracht wird, dadurch gekennzeichnet, dass das Kopolymer eine Verbindung mit der folgenden Formel ist:

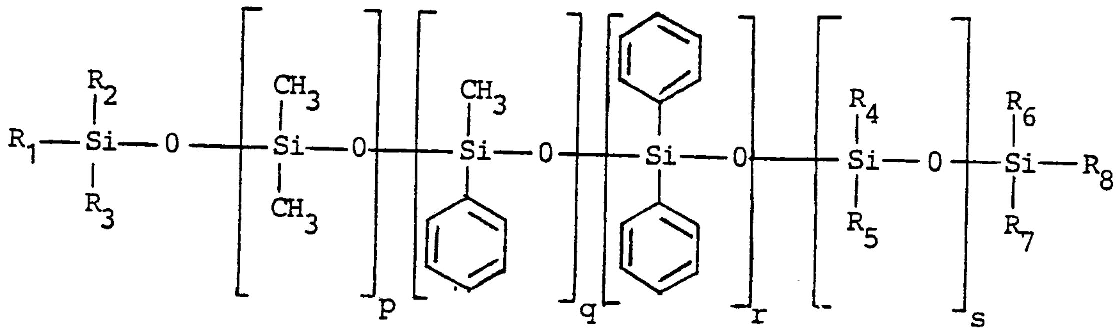

worin $R_1$ und $R_8$ organische Gruppen sind, die aus der Gruppe gewählt sind, die durch Alkylgruppen, Arylgruppen und akrylatesterhaltige Alkylgruppen gebildet ist, worin $R_2$, $R_3$, $R_4$, $R_6$ und $R_7$ organische Gruppen sind, die aus der Gruppe gewählt sind, die durch Alkylgruppen und Arylgruppen gebildet ist, und worin $R_5$ eine akrylatesterhaltige organische Gruppe ist, wobei das mittlere Molekulargewicht der Polymermoleküle zwischen 1000 und 1000000 liegt, wobei die mittleren Fraktionen der monomeren Einheiten je Polymermolekül innerhalb der folgenden Grenzen liegen:

$0{,}005 \leq p \leq 0{,}995$
$0 \leq q \leq 0{,}995$
$0 \leq r \leq 0{,}49$
$0{,}02 \leq s \leq 0{,}1$,

wobei $0{,}25 < (q+2r) < 0{,}6$ ist und wobei die monomeren Einheiten blockweise, alternierend oder beliebig in dem Molekül verteilt sein können und wobei das Kopolymer mindestens zwei Akrylatestergruppen je Molekül enthält.

**Revendications**

1. Fibre optique en verre munie d'un revêtement en matière synthétique comprenant une fibre en verre et une couche enveloppante en caoutchouc synthétique présentant un indice de réfraction qui est supérieur à celui de la couche extérieure de la fibre en verre, le caoutchouc synthétique étant formé par une composition de matière synthétique durcissable contenant un copolymère présentant, comme unités monomères, du diméthylsiloxane et au moins un siloxane du groupe formé par le méthylphénylsiloxane et le diphénylsiloxane, caractérisé en ce que le copolymère est un composé répondant à la formule suivante:

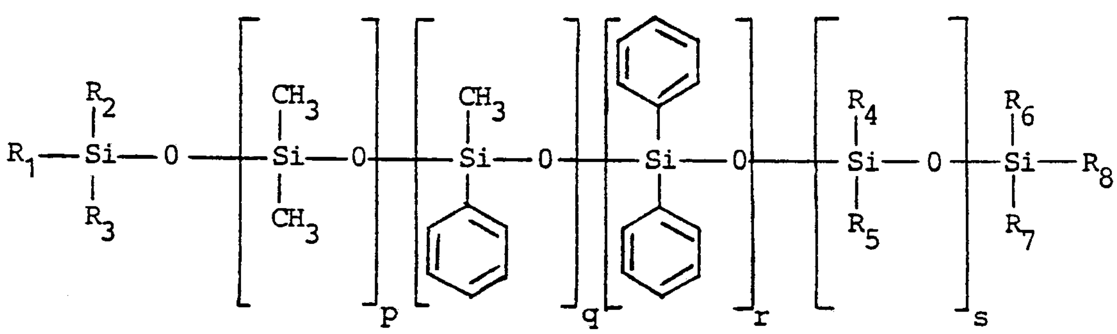

dans laquelle $R_1$ et $R_8$ sont des groups organiques choisis dans le groupe constitué par des groupes alkyles, des groups aryles et des groupes alkyles contenant un ester acrylique, dans laquelle $R_2$, $R_3$, $R_4$, $R_6$ et $R_7$ sont des groupes organiques choisis dans le groupe formé par des groupes alkyles et des groupes aryles et dans laquelle $R_5$ est un groupe organique contenant un ester acrylique, le poids moléculaire moyen des molécules polymères étant compris entre 1000 et 1000000, les fractions moyennes des unités monomères étant situées par molécule polymère entre les limites suivants:

$0{,}005 \leq p \leq 0{,}995$
$0 \leq q \leq 0{,}995$
$0 \leq r \leq 0{,}49$
$0{,}02 < s \leq 0{,}1$,

dans laquelle $0{,}25 < (q+2r) < 0{,}6$, les unités monomères pouvant être divisées par blocs, de façon alternée

ou arbitraire dans la molécule et le copolymère contenant au moins deux groupes d'esters acryliques par molécule.

2. Fibre optique en verre selon la revendication 1, caractérisé en ce que $R_5$ est un groupe alkyle contenant un ester acrylique.

3. Fibre optique en verre selon la revendication 1, caractérisée en ce que $R_5$ est un chaîne de polysiloxane contenant un ester acrylique du même type et de la même composition moyenne que la chaîne principale de la molécule du polymère.

4. Fibre optique en verre selon la revendication 1, caractérisée en ce que (q+2r) se situe entre les limites 0,4 et 0,6.

5. Fibre optique en verre selon l'une des revendications 1 à 4, caractérisée en ce que la composition de matière synthétique durcissable contient 0 à 20% en poids d'un ou de plusieurs composés d'acrylate monomères.

6. Fibre optique en verre selon la revendication 5, caractérisée en ce que les composés d'acrylate monomères sont choisis dans le groupe formé par le diacrylate d'hexandiol, l'acrylate 2-éthoxyéthylique, l'acrylate 2'-éthoxy-2-éthoxy-éthylique et le triacrylate de triméthylolpropane.

7. Procédé pour la fabrication d'une fibre optique en verre munie d'un revêtement de matière synthétique, selon lequel une fibre en verre est entourée, immédiatement après la formation, d'une couche en une composition de matière synthétique durcissable contenant un copolymère présentant, comme unités monomères, du diméthylsiloxane et au moins un siloxane du groupe formé par le méthylphénylsiloxane et le diphénylsiloxane, après quoi la composition de matiere synthétique durcissable est portée à durcissement, caractérisé en ce que le polymère est un composé répondant à la formula suivante:

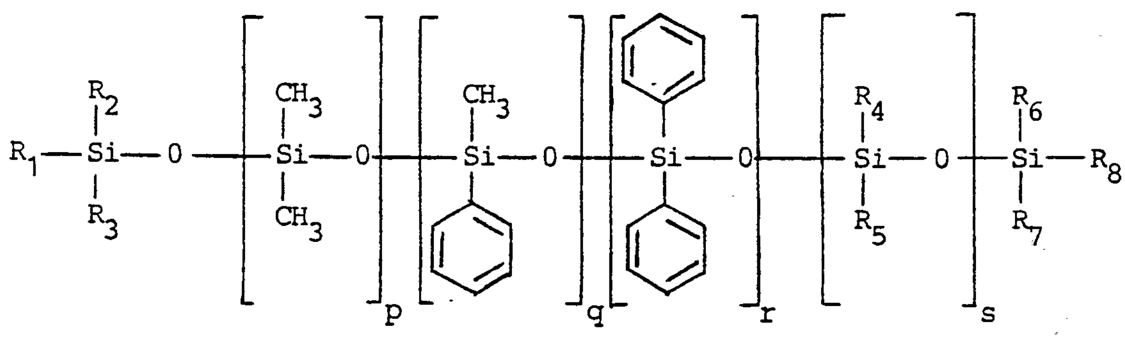

dans laquelle $R_1$ et $R_8$ sont des groups organiques choisis dans le groupe constitué par des groupes alkyles, des groups aryles et des groupes alkyles contenant un ester acrylique, dans laquelle $R_2$, $R_3$, $R_4$, $R_6$ et $R_7$ sont des groupes organiques choisis dans le groupe formé par des groupes alkyles et des groupes aryles et dans laquelle $R_5$ est un groupe organique contenant un ester acrylique, le poids moléculaire moyen des molécules de polymère étant compris entre 1000 et 1000000, les fractions moyennes des unités monomères étant situées par molécule de polymère entre les limites suivantes:

$0{,}005 \leq p \leq 0{,}995$
$0 \leq q \leq 0{,}995$
$0 \leq r \leq 0{,}49$
$0{,}02 < s \leq 0{,}1,$

dans laquelle $0{,}25 < (q+2r) < 0{,}6$, les unités monomères pouvant être divisées par blocs, de façon alternée ou arbitraire dans la molécule et le copolymère contenant au moins deux groupes d'esters acryliques par molécule.

**Claims**

1. An optical glass fibre having a synthetic resin cladding, comprising a glass fibre and an enveloping layer of a synthetic rubber having a refractive index which is higher than the refractive index of the outermost layer of the glass fibre, the synthetic rubber being formed from a curable synthetic resin composition which comprises a copolymer which has monomeric units comprising dimethyl siloxane and at least one siloxane selected from the group formed by methyl phenyl siloxane and diphenyl siloxane, characterized in that the copolymer is a compound of the following formula:

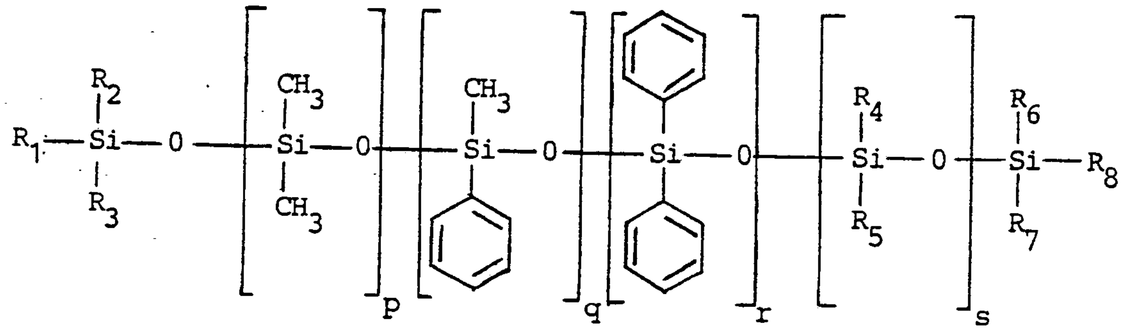

wherein $R_1$ and $R_8$ are organic groups which are selected from the group formed by alkyl groups, aryl groups and acrylate ester-containing alkyl groups, wherein $R_2$, $R_3$, $R_4$, $R_6$ and $R_7$ are organic groups which are selected from the group formed by alkyl groups and aryl groups, and wherein $R_5$ is an acrylate ester-containing organic group, the average molecular weight of the polymer molecules being between 1,000 and 1,000,000, the average functions of the monomeric units per polymer molecule being within the following limits:

$0{,}005 \leq p \leq 0{,}995$
$0 \leq q \leq 0{,}995$
$0 \leq r \leq 0{,}49$
$0{,}02 \leq s \leq 0{,}1$,

wherein $0{,}25 < (q+2r) < 0{,}6$ and wherein the monomeric units may be distributed in the molecule blockwise, alternatingly or randomly and the copolymer comprising at least two acrylate-ester groups per molecule.

2. An optical glass fibre as claimed in Claim 1, characterized in that $R_5$ is an acrylate ester-containing alkyl group.

3. An optical glass fibre as claimed in Claim 1, characterized in that $R_5$ is an acrylate ester-containing polysiloxane chain of the same type and of the same average composition as the main chain of the polymer molecule.

4. An optical glass fibre as claimed in Claim 1, characterized in that $(q+2r)$ ranges between 0.4 and 0.6.

5. An optical glass fibre as claimed in any of the Claims 1 to 4, characterized in that the curable synthetic resin composition comprises 0 to 20% by weight of one or more monomeric acrylate compounds.

6. An optical glass fibre as claimed in Claim 5, characterized in that the monomeric acrylate compounds are selected from the group formed by hexanediol diacrylate, 2-ethoxy-ethyl acrylate, 2'-ethoxy-ethyl acrylate and trimethylol propane triacrylate.

7. A method of manufacturing an optical glass fibre having a synthetic resin cladding, in which a glass fibre is clad with a layer of a curable synthetic resin composition immediately after it has been formed, which layer comprises a copolymer which contains as monomeric units dimethyl siloxane and at least one siloxane selected from the group formed by methyl phenyl siloxane and diphenyl siloxane, after which the curable synthetic resin composition is made to cure, characterized in that the copolymer is a compound of the following formula:

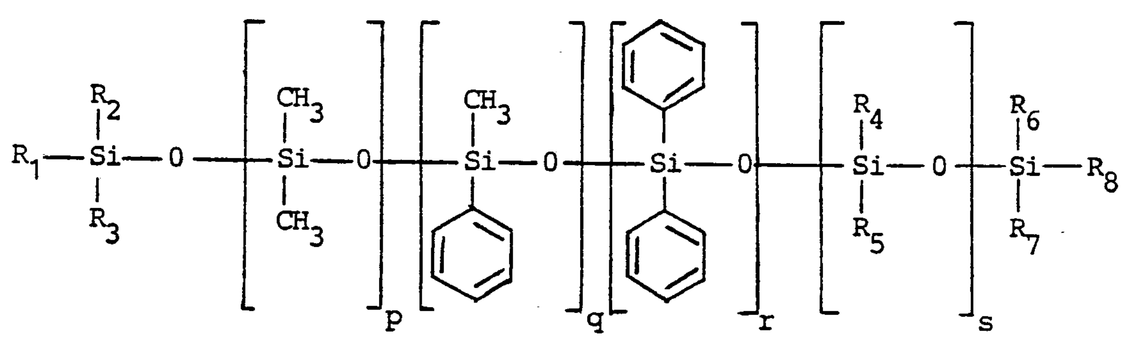

wherein $R_1$ and $R_8$ are organic groups which are selected from the group formed by alkyl groups, aryl groups and acrylate ester-containing alkyl groups, wherein $R_2$, $R_3$, $R_4$, $R_6$ and $R_7$ are organic groups which are selected from the group formed by alkyl groups and aryl groups, and wherein $R_5$ is an acrylate ester-containing organic group, the average molecular weight of the polymer molecules being between 1,000

and 1,000,000, the average functions of the monomeric units per polymer molecule being within the following limits:

$0,005 \leq p \leq 0,995$
$0 \leq q \leq 0,995$
$0 \leq r \leq 0,49$
$0,02 \leq s \leq 0,1$,

wherein $0,25 < (q+2r) < 0,6$ and wherein the monomeric units may be distributed in the molecule blockwise, alternatingly or randomly and the copolymer comprising at least two acrylate-ester groups per molecule.

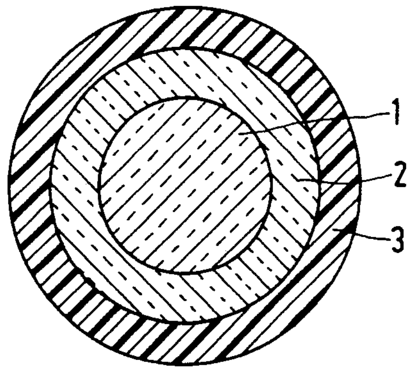


FIG.1

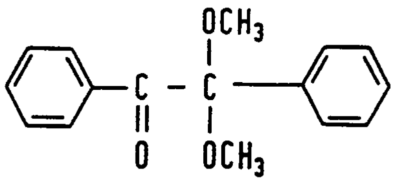

a

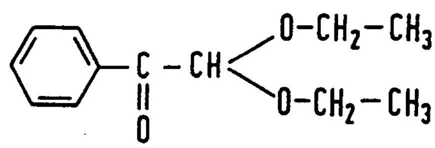

b

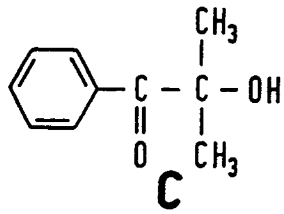

c

FIG.2

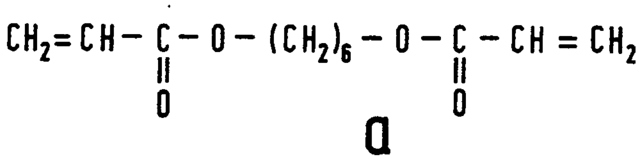

a

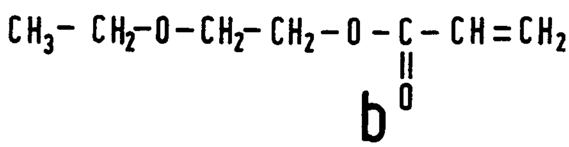

b

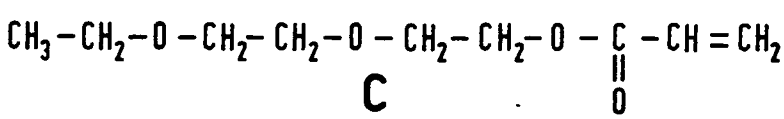

c

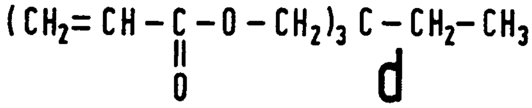

d

FIG.3

PHN 10963